# EUROPEAN PATENT SPECIFICATION

(11) **EP 1 707 408 B1**
(45) Date of publication and mention of the grant of the patent: **19.09.2012**
(21) Application number: 05252077.2
(22) Date of filing: 01.04.2005
(51) Int. Cl.: B60G 11/28, B60G 11/27, B60G 17/052, B60G 3/20

(54) **Vehicle suspension systems**
Fahrzeugaufhängungssysteme
Systèmes de suspension pour véhicule

(43) Date of publication of application: 04.10.2006
(73) Proprietor: HMT Vehicles Limited, Westbury-on-Trim, Bristol. BS9 3PF (GB)
(72) Inventor: Dare-Bryan, Valerian John, Suffolk. IP29 5LA (GB)
(74) Representative: Slingsby, Philip Roy

(56) References cited:
- FR-A- 1 133 596
- FR-A- 1 202 376
- GB-A- 580 065
- GB-A- 988 199
- GB-A- 1 375 339
- GB-A- 2 207 646
- US-A- 5 085 457
- US-A- 5 704 632

## Description

### Field of the Invention

This invention relates to vehicle suspension systems.

Patent GB 1375339 discloses a pneumatic suspension assembly in which a parallelogram linkage is configured so as to maintain the axis of the piston substantially along the axis of the pneumatic chamber.

Patent GB 988199 discloses a vehicle suspension system in which displacements of the wheel carrier unit are coupled to horizontally acting spring units through a control arm of the wheel carrier assembly. The spring units have an axially moveable strut that is ball-jointed to a bell crank incorporated into the control arm.

The use of a vertically acting airbag imposes space and design requirements on the suspension system, and coupling the vertical motion of the tyre to the horizontal motion of the spring units without utilising a push rod limits the range of suspension travel. It is accordingly an object of the present invention to provide a vehicle suspension system that includes the use of an airbag that acts substantially horizontally and a push rod to improve the range of suspension travel.

### Summary of the Invention

According to the present invention there is provided a vehicle suspension system that includes an airbag arranged to act substantially horizontally so as to apply a substantially horizontal force to an airbag mounting which carries a pivot mounting, and a parallelogram linkage that acts between the pivot mounting and a part of the vehicle chassis.

The parallelogram linkage includes a rocker pivotally connected at its one end to said part of the vehicle chassis for pivotal movement relative thereto about a substantially horizontal pivot axis and pivotally connected at its other end to the airbag mounting or a component fixed to the airbag mounting. The parallelogram linkage also comprises three links, with one end of the first link connected to said part of the vehicle chassis and its other end connected to one end of the second link, the other end of the second link being connected to one end of the third link and the other end of the third link pivotally connected to the airbag mounting.

A push rod is connected at its one end to the rocker at a position intermediate the ends of the rocker and at its other end to a wheel hub support member suspended from the vehicle chassis by suspension links.

This arrangement provides for optimum vertical wheel displacement and variable ride height ability.

Two airbags are preferable mounted on the chassis so as to act transversely of the axis of the vehicle chassis, the airbags being disposed in a substantially back-to-back manner. This provides a balanced arrangement and avoids the application of torsional twisting loads to the chassis.

### Brief Description of the Drawings

Figure 1 is a schematic side view of the vehicle suspension system.
Figure 2 is a front view of a first form of suspension system mounted on the chassis of a vehicle having a hub assembly drive system.
Figure 3 is a plan view of the chassis, suspension system and drive system shown in Figure 2.
Figure 4 is a side view corresponding to Figure 2 but showing a wheel mounted on the hub assembly
Figure 5 is a plan view corresponding to Figure 3 but showing a wheel mounted on the hub assembly.

### Description of the Preferred Embodiment

As can be seen from the drawings, the suspension system includes an air bag 10 mounted on the vehicle chassis 11 and arranged to act horizontally so as to apply a resilient force to an air bag mounting plate 12 that carries a pivot mounting 13. A part 14 of the chassis 11 carries a mounting 15 for a main pivot for one arm of a rocker 16. The other arm of the rocker 16 is attached to pivot mounting 13. The air bag 10 extends transversely to the centre line or axis of the vehicle chassis 11 and acts outwardly of the centre line of the chassis 11.

The rocker 16 forms part of a parallelogram linkage system that also includes a first link 17, a second link 18 and a third link 19. One end of the first link 17 is connected to the mounting 15 and the other end of the first link 17 is connected to one end of the second link 18. The other end of the second link 18 is connected to one end of the third link 19 and the other end of the third link 19 is connected, in turn, to the pivot mounting 13.

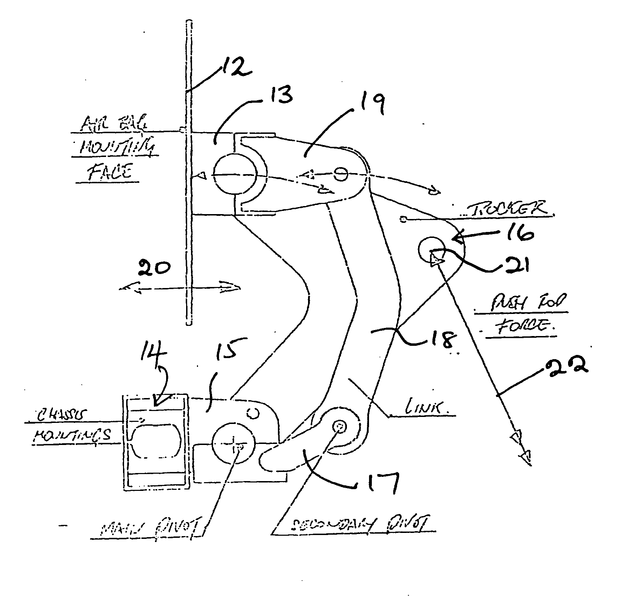

The action of the parallelogram linkage system 16, 17, 18, 19 is such that, as the air bag mounting plate 12 moves horizontally, as indicated by the arrow 20 in Figure 1, tilting movement of the air bag mounting plate 12 is prevented and the action of the air bag 10 is maintained horizontally.

The rocker 16 carries a pivot mounting 21 for a push rod 22 that is connected to a mounting 23 for a road wheel hub 24, and the mounting 23 is supported by suspension links 25 connected to the chassis 10. As shown in the drawings, a shock absorber 27 acts between the lower suspension link 25 and the chassis 11.

The parallelogram linkage system 16, 17, 18, 19 connecting the chassis mounting 15 and the pivot mounting 13 carried by the air bag mounting plate 12 permits substantial, controlled vertical displacement of the road wheel hub 24 and the mounting 23 and provides for variable ride height.

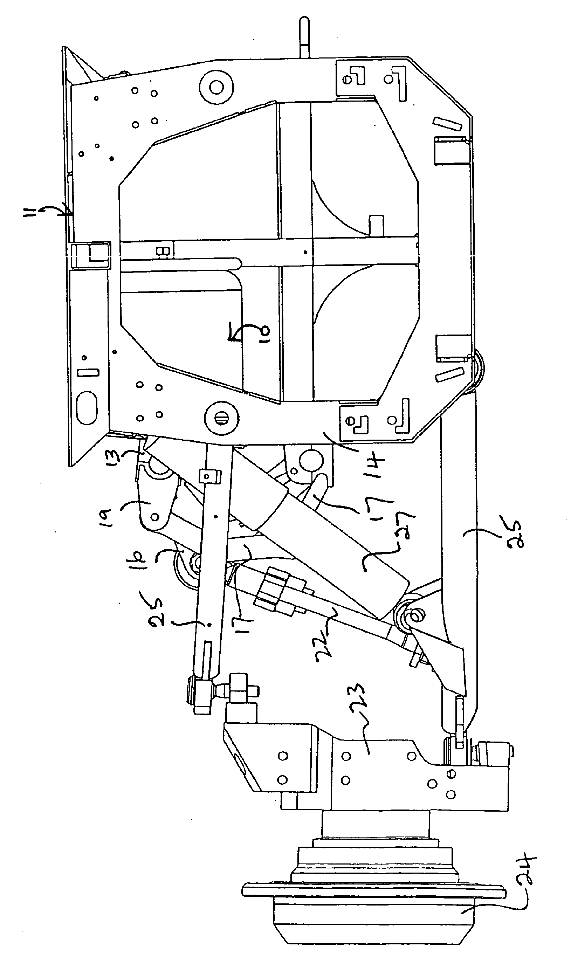

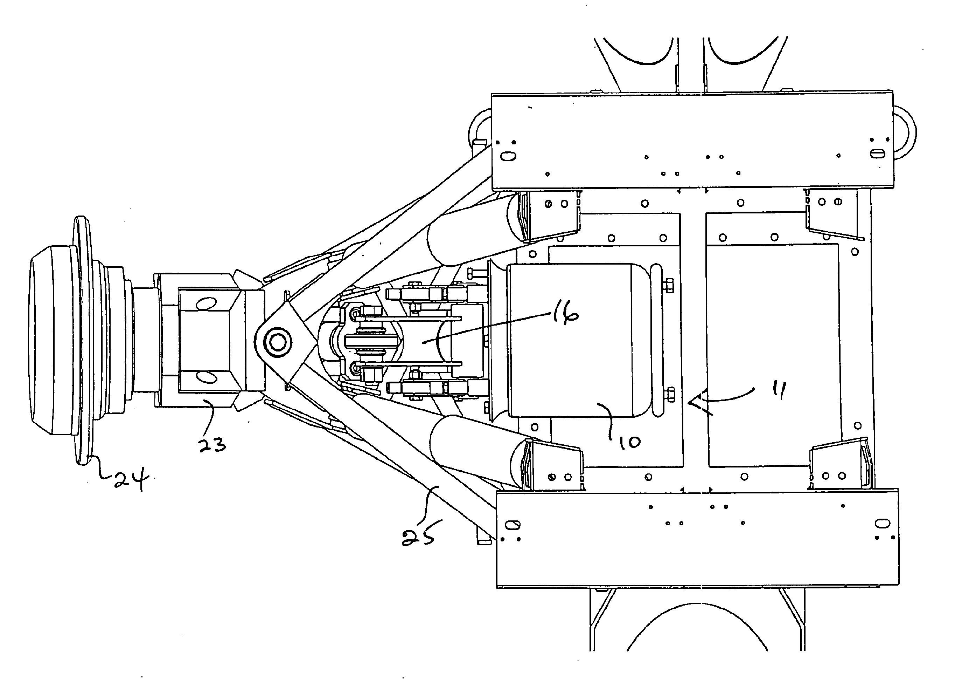

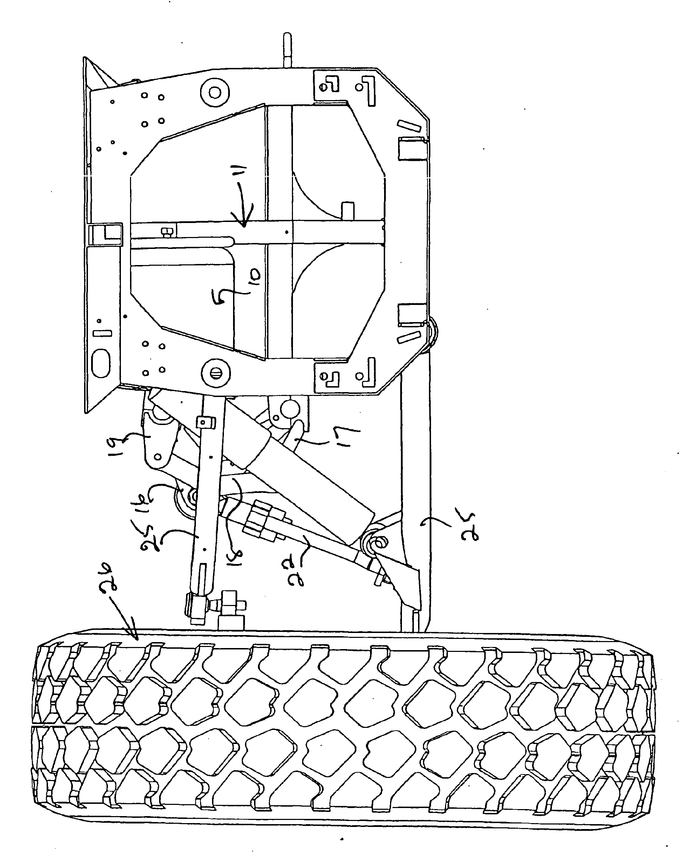

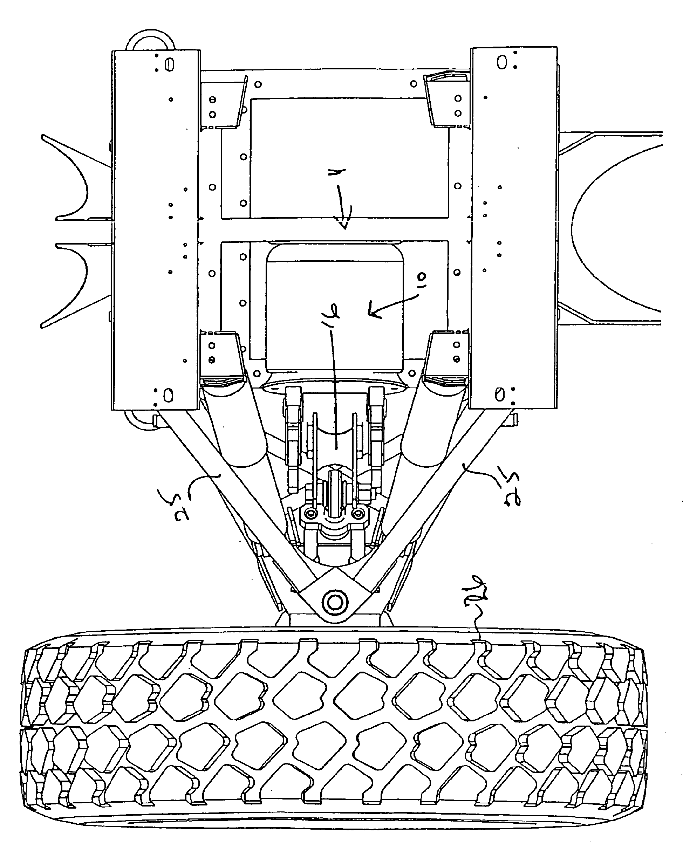

Figures 4 and 5 show a wheel 26 mounted on the road wheel hub 24. The wheel 26 has not been shown in Figures 2 and 3 in order to enable details of the wheel hub 24 and the mounting 23 to be seen.

The drawings show the suspension system for a single wheel 26 of the vehicle and it will be appreciated that there will be another suspension system of mirror image form on the other side of the vehicle. This arrangement will then be repeated for each pair of wheels 26 of the vehicle.

Two airbags 10 will thus be mounted on the chassis 11 so as to act transversely of the axis of the vehicle chassis 11 and will be disposed in a substantially back-to-back manner. This provides a balanced arrangement and avoids the application of torsional twisting loads to the chassis 11.

## Claims

1. A vehicle suspension system comprising:
an airbag (10) arranged to act substantially horizontally so as to apply a substantially horizontal force to an airbag mounting (12) which carries a pivot mounting (13);
a parallelogram linkage (16, 17, 18, 19) comprising a rocker (16) pivotally connected at its one end to a part of the vehicle chassis (15) for pivotal movement relative thereto about a substantially horizontal pivot axis and pivotally connected at its other end to said pivot mounting (13), and three links (17, 18, 19), the first link (17) having one end connected to the vehicle chassis (15) and the other end of the first link (17) being connected to one end of the second link (18), the other end of the second link (18) being connected to one end of the third link (19) and the other end of the third link (19) being connected to said pivot mounting (13), the parallelogram linkage acting between the pivot mounting (13) and the part of the vehicle chassis (15) so as to prevent titling of the airbag mounting; and
a push rod (22) connected at its one end to the rocker at a position (21) intermediate the ends of the rocker and at its other end to a wheel hub support member (23) suspended from the vehicle chassis by suspension links (25).

2. A vehicle suspension system as claimed in claim 1, wherein the airbag mounting comprises a plate attached to a mounting face of the airbag.

3. A vehicle suspension as claimed in any one of the preceding claims, in which the airbag acts transversely of the centreline of the chassis.

4. A vehicle suspension system as claimed in claim 2, which includes two airbags disposed back-to-back.

## Patentansprüche

1. Fahrzeugaufhängungssystem, umfassend:
einen Airbag (10), der eingerichtet ist, im Wesentlichen horizontal zu wirken, um eine im Wesentlichen horizontale Kraft auf eine Airbag-Halterung (12) auszuüben, die eine Drehzapfenhalterung (13)trägt;
ein Parallelogrammgestänge (16, 17, 18, 19), das eine Schwinge (16) umfasst, die an ihrem einen Ende drehgelenkig mit einem Teil des Fahrzeugfahrgestells (15) für drehgelenkige Bewegung relativ dazu um eine im wesentlichen horizontale Drehachse verbunden ist und an ihrem anderen Ende drehgelenkig mit der besagten Drehzapfenhalterung (13)und drei Verbindungsgliedern (17, 18, 19) verbunden ist, wobei ein Ende des ersten Verbindungsglieds (17) mit dem Fahrzeugfahrgestell (15) verbunden ist und das andere Ende des ersten Verbindungsglieds (17) mit einem Ende des zweiten Verbindungsglieds (18)verbunden ist, wobei das andere Ende des zweiten Verbindungsglieds (18) mit einem Ende des dritten Verbindungsglieds (19) verbunden ist und das andere Ende des dritten Verbindungsglieds (19) mit der besagten Drehzapfenhalterung (13) verbunden ist, wobei das Parallelogrammgestänge zwischen der Drehzapfenhalterung (13) und dem Teil des Fahrzeugfahrgestells (15) wirkt, um Neigung der Airbag-Halterung zu verhindern; und
eine Druckstange (22), die an ihrem einen Ende mit der Schwinge in einer Position (21) zwischen den Enden der Schwinge und an ihrem andere Ende mit einem Stützelement (23) der Radnabe verbunden ist, das vom Fahrzeugfahrgestell durch Aufhängeverbindungsglieder (25)aufgehängt ist.

2. Fahrzeugaufhängungssystem wie in Anspruch 1 beansprucht, wobei die Airbag-Halterung eine Platte umfasst, die an einer Montagestirnfläche des Airbags befestigt ist.

3. Fahrzeugaufhängung wie in einem beliebigen der vorhergehenden Ansprüche beansprucht, bei welcher der Airbag quer der Mittellinie des Fahrgestells wirkt.

4. Fahrzeugaufhängungssystem wie in Anspruch 2 beansprucht, das zwei Airbags einschließt, die Rücken an Rücken angeordnet sind.

## Revendications

1. Un système de suspension de véhicule comprenant :
un coussin d'air (10) disposé pour agir essentiellement à l'horizontale afin d'exercer une force essentiellement horizontale sur un montage de coussin d'air (12) qui porte un montage de pivot (13) ;
une tringlerie en parallélogramme (16, 17, 18, 19) comprenant un culbuteur (16) relié de façon pivotante à une de ses extrémités à une partie du châssis du véhicule (15) pour un mouvement pivotant par rapport à celui-ci autour d'un axe de pivotement essentiellement horizontal et relié de façon pivotante à son autre extrémité au dit montage de pivot (13) et trois liens (17, 18, 19), le premier lien (17) ayant une extrémité reliée au châssis du véhicule (15) et l'autre extrémité du premier lien (17) étant reliée à une extrémité du second lien (18), l'autre extrémité du second bras (18) étant reliée à une extrémité du troisième lien (19) et l'autre extrémité du troisième lien (19) étant reliée au dit montage de pivot (13), la tringlerie en parallélogramme agissant entre le montage de pivot (13) et la partie du châssis du véhicule (15) pour éviter un basculement du montage de coussin d'air ; et
une tige-poussoir (22) reliée à une de ses extrémités au culbuteur à un emplacement (21) intermédiaire entre les extrémités du culbuteur et à son autre extrémité à un élément de support de moyeu de roue (23)suspendu du châssis du véhicule par des liens de suspension (25).

2. Un système de suspension de véhicule selon la revendication 1, dans lequel le montage de coussin d'air comprend une plaque attachée à une face de montage du coussin d'air.

3. Une suspension de véhicule selon une des revendications précédentes, dans lequel le coussin d'air agit transversalement par rapport à la ligne médiane du châssis.

4. Un système de suspension de véhicule selon la revendication 2, qui inclut deux coussins d'air disposés dos à dos.
